# DEMANDE DE BREVET EUROPEEN

(11) **EP 2 147 816 A1**
(43) Date de publication de la demande: **27.01.2010**
(21) Numéro de dépôt: 09405122.4
(22) Date de dépôt: 22.07.2009
(51) Int. Cl.: B60K 15/04

(54) **Bouchon de réservoir pour un véhicule à moteur diesel**

(30) Priorité: 22.07.2008 CH 11472008
(71) Demandeur: DG Tec S.a.r.l., 1893 Muraz (CH)
(72) Inventeur: De Gol, Patrice, 1893 Muraz (CH); De Gol, Fabrice, 1890 Saint-Maurice (CH)
(74) Mandataire: Nithardt, Roland

(57) **Abrégé**

L'invention concerne un bouchon de réservoir pour un véhicule à moteur diesel qui évite un remplissage du réservoir en carburant avec de l'essence sans plomb, qui peut remplacer le bouchon standard équipant le véhicule et être utilisé sur plusieurs véhicules différents grâce à un embout interchangeable. Ce bouchon de réservoir (10) se compose d'un corps cylindrique (11) agencé pour renfermer des moyens d'obturation du réservoir et d'un embout cylindrique (12) amovible destiné à coopérer avec des moyens de fixation du bouchon standard équipant le véhicule. Le corps (11) et l'embout (12) sont pourvus d'un passage cylindrique traversant de diamètre identique formant la tubulure de remplissage (13) du bouchon. Le bouchon (10) comporte en outre, dans le corps cylindrique (11), des moyens de détection du diamètre du pistolet de remplissage, ces moyens détection étant agencés pour commander l'ouverture des moyens d'obturation uniquement lorsque le diamètre du pistolet de remplissage est égal au diamètre du pistolet de remplissage en carburant diesel.

## Description

### Domaine technique

La présente invention concerne un bouchon de réservoir pour un véhicule à moteur diesel comprenant un corps pourvu d'une tubulure de remplissage dudit réservoir dans laquelle sont disposés des moyens d'obturation de ladite tubulure, lesdits moyens d'obturation étant agencés pour se déplacer d'une position de fermeture à une position d'ouverture sous l'action d'un pistolet de remplissage en carburant d'une pompe à essence, et un embout solidaire dudit corps et agencé pour coopérer avec l'entrée du réservoir du véhicule.

### Technique antérieure

De plus en plus de véhicules sont équipés d'un moteur diesel et un remplissage des réservoirs de ces véhicules avec de l'essence sans plomb peut provoquer de graves dégâts aux moteurs. Bien que les pompes des stations service soient différenciées par des couleurs, ce type d'erreur est malheureusement assez courant puisque le diamètre du pistolet de remplissage de la colonne d'essence sans plomb est de vingt et un millimètres et donc inférieur au diamètre du pistolet de la colonne du diesel qui est de vingt cinq millimètres. Le pistolet de remplissage en essence sans plomb peut donc être introduit sans problème dans l'orifice de remplissage du réservoir d'un véhicule à moteur diesel.

Différents dispositifs ont été inventés pour essayer d'éviter au conducteur distrait d'un véhicule un mauvais remplissage de son réservoir de carburant.

On connaît notamment par la publication internationale WO/2007/013863 un accessoire destiné à être fixé sur l'entrée du réservoir et dans lequel un obturateur pivotant en forme de crochet associé à un ressort en forme d'agrafe empêche l'introduction dans le réservoir d'un pistolet de remplissage dont le diamètre extérieur est inférieur au diamètre intérieur du corps de l'accessoire.

On connaît également par la publication US 2005/0000592 un dispositif dont le but est similaire et qui se compose d'un manchon allongé destiné à être introduit dans l'orifice de remplissage du réservoir d'un véhicule. Ce manchon est pourvu de moyens de blocage et de moyens d'arrêt du pistolet de remplissage lorsque celui-ci est un pistolet de remplissage pour essence sans plomb.

Le dispositif objet du brevet américain US 6 302 169 est un réducteur du diamètre de l'entrée d'un réservoir de carburant d'un véhicule à moteur diesel. Ce dispositif est destiné à être monté entre ladite entrée du réservoir et le bouchon de ce réservoir ou peut également être intégré à l'entrée du réservoir. Il comporte un clapet d'obturation solidaire d'au moins un bras d'activation qui s'ouvre par le retrait du bras sous l'action de l'insertion du pistolet de remplissage.

### Exposé de l'invention

Tous ces dispositifs connus ne sont que des accessoires qui ne peuvent pas se substituer au bouchon de fermeture du réservoir équipant le véhicule. Le bouchon selon l'invention permet de pallier tous les inconvénients des dispositifs connus en offrant un bouchon de réservoir qui présente toutes les sécurités requises au niveau du remplissage et de l'inviolabilité et qui peut être utilisé sur plusieurs véhicules différents grâce à son embout interchangeable. Ce bouchon d'encombrement restreint fonctionne comme un bouchon standard et peut remplacer le bouchon d'origine équipant le véhicule.

Ce but est atteint par le bouchon tel que défini en préambule et **caractérisé en ce que** ledit bouchon comporte en outre des moyens de détection du diamètre du pistolet de remplissage, et en ce que lesdits moyens détection sont agencés pour commander l'ouverture des moyens d'obturation en fonction d'au moins un diamètre déterminé.

Dans la forme de réalisation préférée du bouchon, l'embout est fixé au corps dudit bouchon par des moyens de fixation amovibles.

De façon avantageuse, l'embout est en outre pourvu de moyens de fixation sur l'entrée du réservoir du véhicule, lesdits moyens de fixation étant agencés pour que ledit embout puisse être fixé sur le réservoir de n'importe quel type de véhicule.

Les moyens de détection d'au moins un diamètre déterminé comportent de préférence au moins deux doigts mobiles disposés de façon à être diamétralement opposés dans la paroi de la tubulure de remplissage du bouchon, lesdits au moins deux doigts mobiles étant agencés pour coopérer avec les moyens d'obturation de ladite tubulure de remplissage.

Dans la forme de réalisation préférée du bouchon les moyens de détection d'au moins un diamètre déterminé comportent quatre doigts mobiles, chaque doigt étant disposé en face d'un autre doigt, lesdits quatre doigts mobiles étant agencés pour coopérer avec les moyens d'obturation de la tubulure de remplissage.

Lesdits doigts mobiles sont avantageusement agencés pour être actionnés et poussés simultanément vers l'extérieur de la paroi de la tubulure de remplissage uniquement sous l'action de l'introduction dans ladite tubulure d'un pistolet de remplissage de diamètre déterminé.

De façon avantageuse, chaque doigt mobile est associé à un ressort agencé pour se comprimer et permettre audit doigt de rentrer dans la paroi du corps lorsque les moyens d'obturation de la tubulure de remplissage sont en position d'ouverture et la distance entre les extrémités se faisant face de deux doigts mobiles opposés est égale au diamètre extérieur du pistolet de remplissage en carburant diesel lorsque les moyens d'obturation de la tubulure de remplissage sont en position de fermeture.

Dans la forme de réalisation préférée du bouchon de l'invention, les moyens d'obturation de la tubulure de remplissage comportent un clapet mobile disposé dans un plan diamétral de ladite tubulure de remplissage et maintenu en position de fermeture de la ladite tubulure par au moins un ressort de torsion coopérant avec ledit clapet.

Le ressort de torsion est avantageusement agencé pour ouvrir le clapet sous l'action de la force appliquée par un pistolet de remplissage sur ledit clapet lorsque ledit pistolet a un diamètre tel qu'il actionne simultanément les doigts mobiles disposés dans la paroi de la tubulure de remplissage.

Le bouchon peut également comporter une soupape agencée pour s'ouvrir en cas de surpression dans le réservoir du véhicule et une soupape agencée pour s'ouvrir en cas de dépression dans ledit réservoir.

De préférence, le bouchon comporte des moyens d'étanchéité disposés, d'une part, entre le corps du bouchon et le clapet et, d'autre part, entre le réservoir sur lequel le bouchon est fixé et l'embout dudit bouchon.

Afin de permettre une position angulaire précise du corps du bouchon par rapport à l'embout, ledit embout comporte sur la paroi intérieure de son logement cylindrique des alvéoles régulièrement disposées et agencées pour correspondre avec les moyens de fixation amovibles.

De façon avantageuse, le bouchon comporte également des moyens d'évacuation de l'eau restant sur les moyens d'obturation.

### Description sommaire des dessins

La présente invention et ses avantages seront mieux compris à la lecture de la description détaillée de mises en oeuvre préférées du dispositif de l'invention, en référence aux dessins annexés donnés à titre indicatif et non limitatif, dans lesquels:
les figures 1A et 1B sont des vues en perspective du bouchon selon l'invention respectivement monté et avant montage de l'embout,
la figure 2 est une vue en perspective éclatée du bouchon de la figure 1,
les figures 3A et 3B sont des vues en perspective en coupe verticale selon le plan A - A de la figure 1A du bouchon respectivement fermé et ouvert lors d'un remplissage du réservoir,
les figures 4A et 4B sont des vues en perspective en coupe verticale selon un plan vertical passant par deux doigts opposés du bouchon respectivement fermé et ouvert lors d'un remplissage du réservoir, et
les figures 5A et 5B sont des vues en perspective de deux formes de réalisation de l'embout du bouchon selon l'invention.

### Meilleures manières de réaliser l'invention

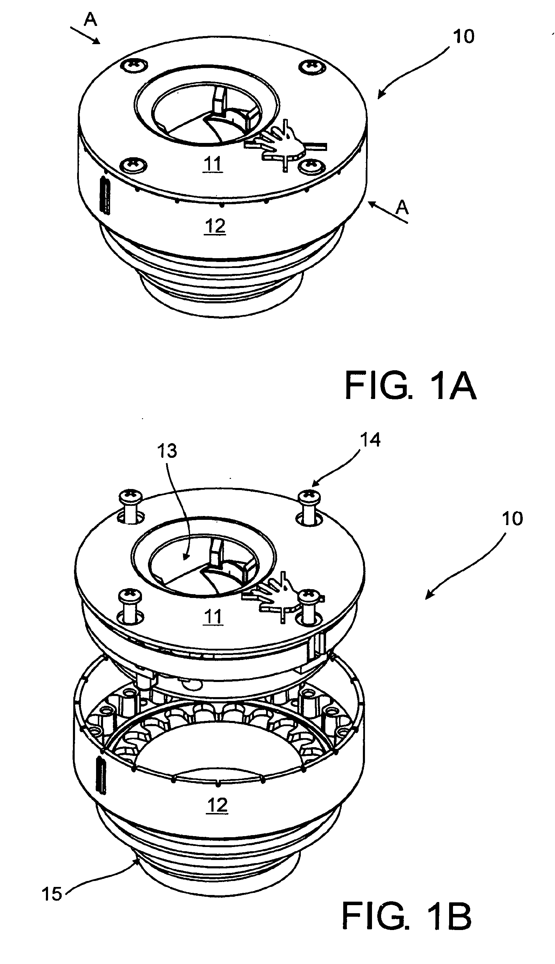

Le bouchon de réservoir 10 selon l'invention pour un véhicule diesel tel qu'illustré par les figures 1A et 1B se compose de deux éléments principaux, à savoir un corps cylindrique 11 agencé pour renfermer des moyens d'obturaticn du réservoir et un embout cylindrique 12 destiné à coopérer avec des moyens de fixation du bouchon standard équipant le véhicule. Le corps 11 et l'embout 12 sont pourvus d'un passage cylindrique traversant de diamètre identique formant la tubulure de remplissage 13 du bouchon, le diamètre de ladite tubulure étant sensiblement supérieur au diamètre d'un pistolet de remplissage 100 en carburant diesel, c'est-à-dire environ 26 mm. Le corps 11 et l'embout 12 sont liés par des moyens de fixation amovibles 14 et l'embout 12 est pourvu de moyens de fixation 15 agencés pour coopérer avec l'ouverture du réservoir sur lequel le bouchon 10 doit être fixé.

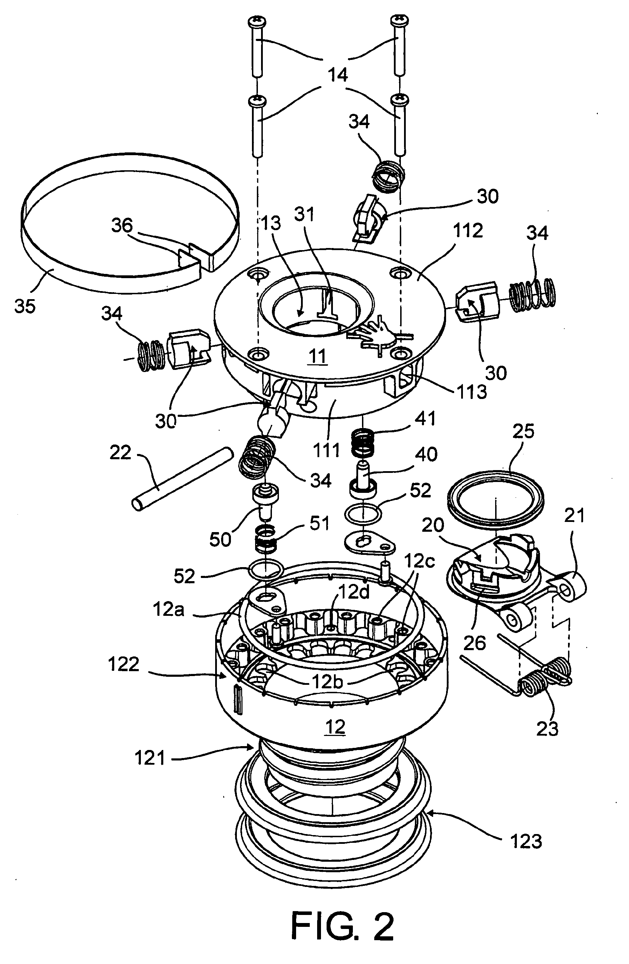

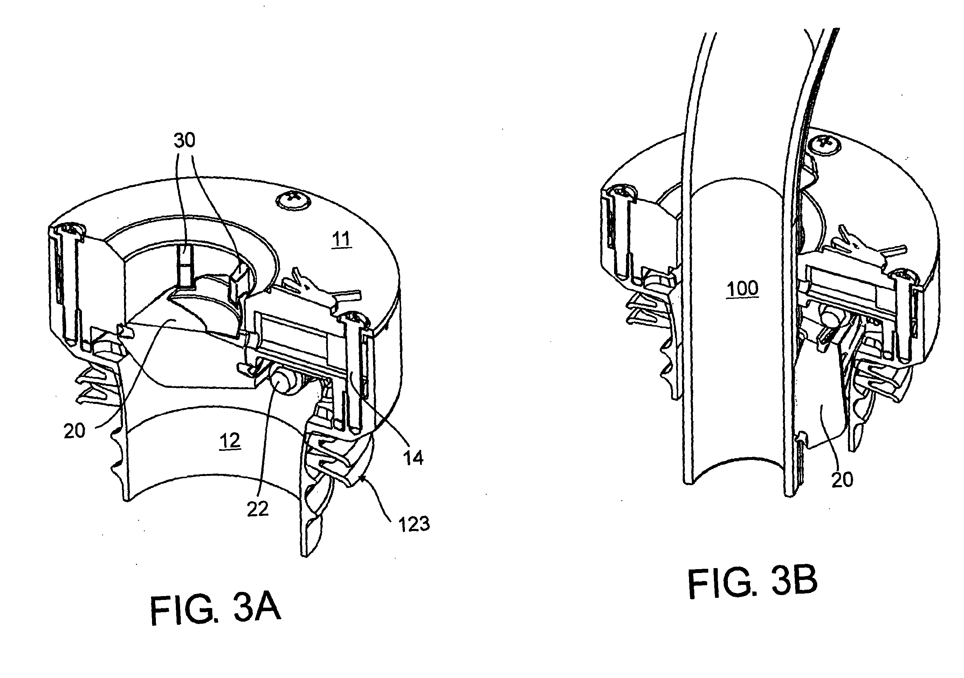

En référence aux figures 2, 3A. 3B, 4A et 4B, le corps 11 se compose d'une partie inférieure annulaire 111 surmontée d'un rebord 112 formant la partie supérieure du bouchon 10 et l'embout 12 se compose d'un logement cylindrique 122 et d'une partie inférieure 121 dont la paroi extérieure est pourvue des moyens de fixation 15 du bouchon sur le réservoir du véhicule. Le logement 122 de l'embout 12 dont le diamètre est égal au diamètre du rebord 112 du corps 11 est agencé pour recevoir la partie annulaire 111 du corps 11 par emboîtement.

Les moyens d'obturation disposés dans le corps 11 du bouchon 10 se composent d'un clapet d'obturation 20 agencé pour se déplacer d'une position de fermeture à une position d'ouverture. A cet effet, ledit clapet 20 est pourvu de deux oreilles de pivotement 21 agencées pour coopérer avec un axe de rotation transversal 22 permettant le pivotement dudit clapet sous l'action d'un ressort de torsion 23 disposé sur l'axe de rotation 22. La surface supérieure du clapet 20 présente une forme concave pour permettre l'introduction du pistolet de remplissage lorsque ledit clapet est rabattu tel qu'illustré par la figure 3B, c'est-à-dire lorsque le bouchon est ouvert. Le clapet 20 est par ailleurs pourvu, sur sa périphérie, d'une gorge agencée pour recevoir un joint torique 25 destiné à assurer l'étanchéité entre ledit clapet et le corps 11, et quatre rainures latérales 26 destinées à coopérer avec des moyens de détection du diamètre du pistolet de remplissage 100.

Ces moyens de détection, qui sont agencés pour commander l'ouverture du clapet 20 en fonction d'au moins un diamètre déterminé du pistolet de remplissage 100, se composent, dans le mode de réalisation représenté, de quatre doigts 30, chaque doigt étant disposé en face d'un autre doigt dans un logement 31 de la partie inférieure 111 du corps 11 débouchant dans la paroi de la tubulure de remplissage 13 du bouchon. Lesdits doigts 30 sont mobiles et agencés pour coopérer avec les rainures latérales 26 du clapet d'obturation 20 pour commander l'ouverture dudit clapet.

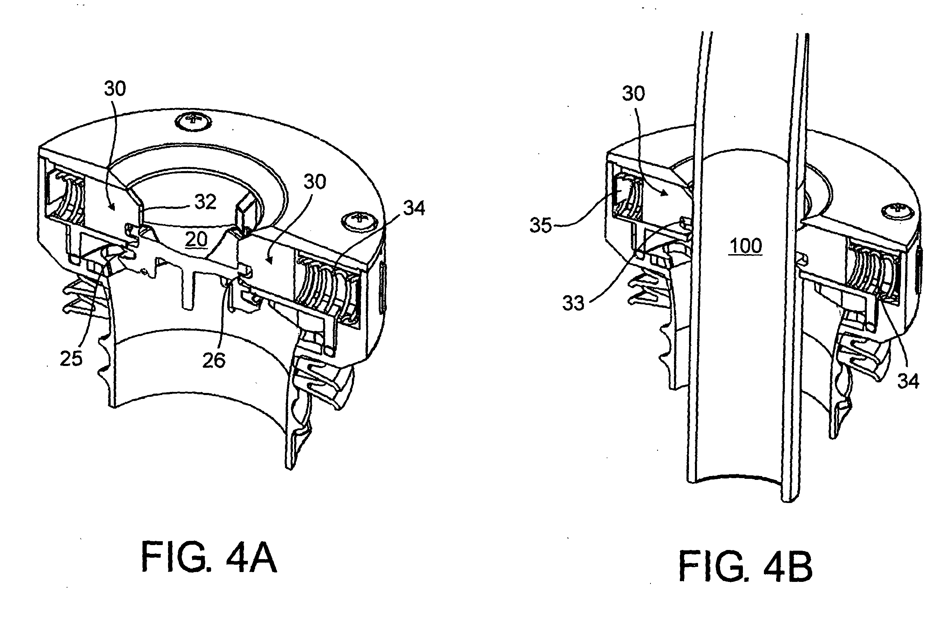

A cet effet, chaque doigt 30 comporte, à son extrémité 32 débouchant dans la tubulure de remplissage 13, une surface inclinée 32b disposée au-dessus d'une rainure 33 agencée pour recevoir le bord supérieur du clapet 20 défini respectivement par la rainure 26 et la surface supérieure dudit clapet lorsque celui-ci est fermé. Par ailleurs chaque doigt 30 est agencé pour être actionné par un ressort spiral 34. Les quatre ressorts 34 sont maintenus en position par un ressort de montage plat cylindrique 35 pourvu de deux pattes de fixation 36 à la partie inférieure 111 du corps 11 et encerclant ladite partie. Les ressorts 34 sont agencés pour se comprimer de façon telle que les doigts 30 auxquels ils sont associés puissent s'escamoter lorsque le clapet d'obturation 20 de la tubulure de remplissage 13 est en position d'ouverture. Par ailleurs, la longueur de ces ressorts 34, lorsqu'ils ne sont pas comprimés, est définie de façon telle que la distance entre les extrémités 32 de deux doigts 30 se faisant face soit légèrement inférieure au diamètre d'un pistolet de remplissage en carburant diesel, c'est-à-dire vingt six millimètres, lorsque le clapet d'obturation 20 de la tubulure de remplissage 13 est en position de fermeture. De cette façon, lors de l'introduction du pistolet 100 dans la tubulure de remplissage telle qu'illustre par la figure 4B, le bord circulaire de l'orifice de sortie du pistolet vient appuyer sur les surfaces inclinées 32b desdits doigts 30 qui sont alors poussés vers l'extérieur par ledit pistolet et déverrouillent ainsi le clapet 20. Lorsque le clapet 20 est déverrouillé, le pistolet le pousse jusqu'à ce que la tubulure de remplissage 13 soit complètement ouverte. Lorsque le pistolet est en place, le clapet 20 est ouvert et les doigts 30 sont escamotés. Lors du retrait du pistolet, le ressort de torsion 23 referme le clapet 20 jusqu'à ce que le joint torique 25 s'appuie contre le corps 11. Si le diamètre du pistolet est inférieur à la distance séparant les extrémités 32 de deux doigts 30, et en particulier égal à vingt et un millimètres qui est le diamètre d'un pistolet de remplissage en essence sans plomb, et que, par conséquent, les doigts 30 ne peuvent pas être actionnés simultanément par le pistolet de remplissage, le clapet 20 reste verrouillé en position de fermeture.

Le corps 11 du bouchon 10 est également pourvu de deux soupapes permettant l'évacuation et l'introduction de l'air, à savoir une soupape 40 agencée pour s'ouvrir en cas de surpression dans le réservoir du véhicule et une soupape 50 agencée pour s'ouvrir en cas de dépression dans ledit réservoir.

La soupape 40 travaille par l'intermédiaire d'un ressort 41 agencé pour contraindre ladite soupape 40 vers le bas pour, en cas de surpression lors de l'augmentation de la température dans le réservoir ou lors d'une déformation de ce réservoir en cas d'accident, laisser de l'air s'échapper dudit réservoir. Un joint torique 42, connu en soi, assure l'étanchéité de la soupape 40 avec le corps 11. La soupape 50, quant à elle, travaille par l'intermédiaire d'un ressort 51 agencé pour contraindre ladite soupape 50 vers le haut pour, en cas de dépression dans le réservoir lors de l'aspiration de la pompe à essence, permettre à de l'air d'entrer dans le réservoir. Un joint torique 52, connu en soi, assure l'étanchéité de la soupape 50 avec le corps 11.

Le logement circulaire 122 de l'embout 12 est par ailleurs pourvu sur sa paroi intérieure d'alvéoles 12b régulièrement disposées et agencées pour correspondre avec les moyens de fixation amovibles 14 afin de permettre une position angulaire précise du corps 11 par rapport audit embout 12. Ces alvéoles angulairement distantes de 18° permettent une position angulaire précise des deux éléments 11 et 12 du bouchon suivant la position du tube d'entée du réservoir. Le rebord 112 du corps 11 est pourvu, dans la forme de réalisation décrite, de quatre alésages agencés pour recevoir quatre vis 14, coopérant avec une couronne de filetages 12c et les alvéoles 12b disposées en dessous de ladite couronne de filetages, liant ledit embout 12 au corps 11. Un joint torique 12a assure l'étanchéité entre le corps 11 et l'embout 12 et un joint torique 123, disposé sous le logement 122, assure l'étanchéité entre le réservoir du véhicule et ledit embout 12.

Le bouchon 10 est par ailleurs pourvu de moyens d'évacuation de l'eau restant sur le clapet d'obturation 20. Ces moyens se composent d'un orifice 113 ménagé dans la paroi annulaire 111 du corps 11 coopérant avec des orifices d'évacuation 12d ménagés entre les filetages 12c du logement 122 de l'embout 12.

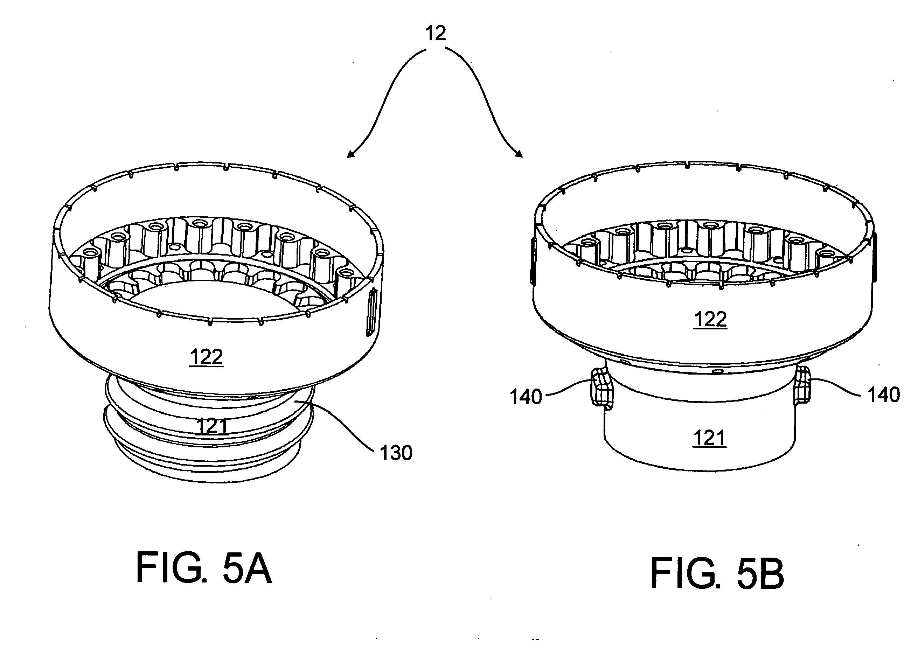

La figure 5A illustre une première forme de réalisation des moyens de fixation 15 de l'embout 12 sur l'orifice d'entrée du réservoir du véhicule. Dans cette forme de réalisation, la partie inférieure 121 de l'embout est pourvue d'un filetage extérieur 130 permettant le vissage du bouchon 10 dans l'orifice d'entrée du réservoir d'un véhicule comportant un bouchon de réservoir à vis. Dans la variante de réalisation illustrée par la figure 5B, l'embout 12 est prévu pour coopérer avec l'entrée d'un réservoir comportant un bouchon à baïonnette. A cet effet, la partie inférieure 121 de l'embout est pourvue sur sa paroi extérieure d'ergots 140 agencés pour coopérer avec des rainures correspondantes de l'entrée du réservoir. Ces différentes réalisations de l'embout 12 et sa fixation amovible sur le corps 11 contenant tout le mécanisme du bouchon selon l'invention permettent d'utiliser ledit bouchon sur un autre véhicule sans être obligé d'acheter un bouchon complet.

Le corps 11, l'embout 12 ainsi que le clapet 20 du bouchon 10 sont de préférence réalisés en polyamide ou en un matériau similaire, les autres composants dudit bouchon étant de préférence réalisés en acier inoxydable.

La présente invention n'est toutefois pas limitée aux formes de réalisation décrites et aux matériaux utilisés dans ces réalisations. Il est par exemple possible de prévoir un clapet de fermeture de l'entrée de la tubulure de remplissage 13. Il est également possible de prévoir une fixation de l'embout 12 sur le corps 11 par clipsage ou par tout autre moyen similaire..

## Revendications

1. Bouchon de réservoir (10) pour un véhicule à moteur diesel comprenant un corps (11) pourvu d'une tubulure de remplissage (13) dudit réservoir dans laquelle sont disposés des moyens d'obturation (20) de ladite tubulure, lesdits moyens d'obturation étant agencés pour se déplacer d'une position de fermeture à une position d'ouverture sous l'action d'un pistolet (100) de remplissage en carburant d'une source d'approvisionnement, et un embout (12) solidaire dudit corps (11) et agencé pour coopérer avec l'entrée du réservoir du véhicule, **caractérisé en ce que** ledit bouchon (10) comporte en outre des moyens de détection (30) du diamètre du pistolet de remplissage (100), et **en ce que** lesdits moyens détection sont agencés pour commander l'ouverture des moyens d'obturation (20) en fonction d'au moins un diamètre déterminé.

2. Bouchon de réservoir selon la revendication 1, **caractérisé en ce que** l'embout (12) est fixé au corps (11) dudit bouchon par des moyens de fixation amovibles (14, 12c).

3. Bouchon de réservoir selon la revendication 1, **caractérisé en ce que** l'embout (12) est en outre pourvu de moyens de fixation (15) sur l'entrée du réservoir du véhicule, et **en ce que** lesdits moyens de fixation (15) sont agencés pour que ledit embout (12) puisse être fixé sur le réservoir de n'importe quel type de véhicule.

4. Bouchon de réservoir selon la revendication 1, **caractérisé en ce que** les moyens de détection d'au moins un diamètre déterminé comportent au moins deux doigts mobiles (30) disposés face à face dans la paroi de la tubulure de remplissage (13) du bouchon (10), lesdits au moins deux doigts mobiles (30) étant agencés pour coopérer avec les moyer,s d'obturation de ladite tubulure de remplissage.

5. Bouchon de réservoir selon la revendication 4, **caractérisé en ce que** les moyens de détection d'au moins un diamètre déterminé comportent quatre doigts mobiles (30), chaque doigt étant disposé en face d'un autre doigt, lesdits quatre doigts mobiles (30) étant agencés pour coopérer avec les moyens d'obturation de la tubulure de remplissage (13).

6. Bouchon de réservoir selon les revendications 4 et 5, **caractérisé en ce que** lesdits doigts mobiles (30) sont agencés pour être actionnés et poussés simultanément vers l'extérieur de la paroi de la tubulure de remplissage (13) uniquement sous l'action de l'introduction dans ladite tubulure d'un pistolet de remplissage (100) de diamètre déterminé.

7. Bouchon de réservoir selon les revendications 1, 4 et 5, **caractérisé en ce que** chaque doigt mobile (30) est associé à un ressort (34) agencé pour se comprimer et permettre audit doigt de rentrer dans la paroi (111) du corps (11) lorsque les moyens d'obturation de la tubulure de remplissage (13) sont en position d'ouverture.

8. Bouchon de réservoir selon les revendications 1, 4 et 5, **caractérisé en ce que** la distance entre les extrémités (32) se faisant face de deux doigts mobiles (30) opposés est égale au diamètre extérieur du pistolet (100) de remplissage en carburant diesel lorsque les moyens d'obturation (20) de la tubulure de remplissage (13).sont en position de fermeture

9. Bouchon de réservoir selon la revendication 1, **caractérisé en ce que** les moyens d'obturation de la tubulure de remplissage (13) comportent un clapet mobile (20) disposé dans un plan diamétral de ladite tubulure de remplissage (13) et maintenu en position de fermeture de la ladite tubulure par un ressort de torsion (23) coopérant avec ledit clapet (20).

10. Bouchon de réservoir selon la revendication 9, **caractérisé en ce que** le ressort de torsion (23) est agencé pour ouvrir le clapet (20) sous l'action de la force appliquée par le pistolet de remplissage (100) sur ledit clapet lorsque ledit pistolet a un diamètre tel qu'il actionne simultanément les doigts mobiles (30) disposés dans la paroi de la tubulure de remplissage (13).

11. Bouchon de réservoir selon la revendication 1, **caractérisé en ce qu'**il comporte en outre une soupape (40) agencée pour s'ouvrir en cas de surpression dans le réservoir du véhicule et une soupape (50) agencée pour s'ouvrir en cas de dépression dans ledit réservoir.

12. Bouchon de réservoir selon la revendication 9, **caractérisé en ce qu'**il comporte des moyens d'étanchéité (25, 123) disposés, d'une part, entre le corps (11) du bouchon et le clapet (20) et, d'autre part, entre le réservoir sur lequel le bouchon est fixé et l'embout (12) dudit bouchon.

13. Bouchon de réservoir selon la revendication 1, **caractérisé en ce que** l'embout (12) comporte sur la paroi intérieure de son logement cylindrique (122) des alvéoles (12b) régulièrement disposées et agencées pour correspondre avec les moyens de fixation amovibles (14, 12c) afin de permettre une position angulaire précise du corps (11) par rapport audit embout (12).

14. Bouchon de réservoir selon la revendication 1, **caractérisé en ce qu'**il comporte des moyens d'évacuation (113, 12d) de l'eau restant sur les moyens d'obturation (20).
